Europäisches Patentamt

European Patent Office

Office européen des brevets

(11) Publication number: **0 186 320**
**B1**

# (12) EUROPEAN PATENT SPECIFICATION

(45) Date of publication of patent specification: **07.11.90**

(51) Int. Cl.⁵: **H 04 L 12/56**

(21) Application number: **85308621.3**

(22) Date of filing: **27.11.85**

(54) Local area communication network.

(30) Priority: **07.12.84 JP 259633/84**

(43) Date of publication of application:
**02.07.86 Bulletin 86/27**

(45) Publication of the grant of the patent:
**07.11.90 Bulletin 90/45**

(84) Designated Contracting States:
**DE GB NL**

(56) References cited:
**GB-A-2 022 365**
**GB-A-2 098 027**
**GB-A-2 131 654**

**AFIPS, PROCEEDINGS OF THE NATIONAL COMPUTER CONFERENCE, VOL. 45, 7TH-10TH JUNE 1976, PAGES 541-549, NEW YORK, US; D. HUYNH ET AL.: "DESIGN ISSUES FOR MIXED MEDIA PACKET SWITCHING NETWORKS"**

(73) Proprietor: **KABUSHIKI KAISHA TOSHIBA
72, Horikawa-cho Saiwai-ku
Kawasaki-shi Kanagawa-ken 210 (JP)**

(72) Inventor: **Kato, Haruo c/o Patent Division
Toshiba Corp Principal Office 1-1 Shibaura
1-chome
Minato-ku Tokyo (JP)**

(74) Representative: **Shindler, Nigel et al
BATCHELLOR, KIRK & CO. 2 Pear Tree Court
Farringdon Road
London EC1R 0DS (GB)**

(56) References cited:
**ICC'84, LINKS FOR THE FUTURE, SCIENCE, SYSTEMS & SERVICE FOR COMMUNICATIONS, IEEE INTERNATIONAL CONFERENCE ON COMMUNICATION, 14th-17th May 1984, Amsterdam, NL, vol. 1, pages 125-129,**

**IEEE/Elsevier Science Publishers B.V., Amsterdam, NL; Y.J. KANG et al.: "FISHNET: A distributed control local area network"**

**Description**

The present invention relates to a local area communication network for data communication application such as computer-to-computer data traffic, terminal-to-terminal data traffic, and the like.

A great deal of discussion can be seen in the recent literature regarding local networks and their applicability to many of today's local area communication needs. In recent times, the need to develop computer networks capable of data communication has increased, and in particular, there is a real need for a system for exchanging a large amount of information such as image information efficiently, free of error, rapidly.

Known Local Area Communication Networks (hereinafter referred to as LANS) commonly use packet switching systems in which the data transmitted from a data sending node is data temporarily stored in a packet switching exchange connected to a data sender where the data is divided into a plurality of units each of which is called a packet and the data in turn is transferred with each packing unit to a packet switching exchange, and then those packets are reassembled into the original format of the data which finally is transmitted to a data receiving node.

Typically, data is placed on a commonly shared communication bus to which each node, which is usually a computer station, is coupled. The conventional data sending and receiving system will briefly be described as follows:

When a sending station receives a call originating from a signal transmitted from a sending terminal, the call originating signal is detected by a transmission control and, in response to the detection, a send data counter and a packet assembly counter are reset. At this time, a link establishing signal sender permits a link establishing signal to be transmitted to a receiving station. Upon receiving the link establishing signal the receiving station permits a call signal sender to send a call signal to a receiving terminal. Then when the receiving station receives an answer signal from the receiving terminal, the communication link between the sending and receiving terminals is ready for establishing the communication link. In this condition, a received packet counter and a data assembly counter are reset for receiving a packet from the sending station and a link establishing ready signal sender issues a link establishing ready signal to the sending station. Upon receiving the link setting ready signal, the send station drives a communication ready signal sender to transmit a communication ready signal to the sending terminal thereby resulting in establishing the communication link between the sending terminal and the receiving terminal. After establishing the communication link, data transmitted from the transmitting terminal is divided into packets which are delivered in turn to the optimum routes selected at that time, so that the packet is routed to the receiving station through a switching station to the receiving station. The receiving station reassembles the received packets into the original format of the data which in turn is sent to the receiving terminal. The receiving terminal then issues a correct checking answer indicating that the received data is correct or an incorrect checking answer indicating that the received data is erroneous. The receiving station receives these checking answers and uses them to modify the packet form.

In this manner, each node in the local area communication network systems is burdened with the tasks of establishing the communication link, addressing, common bus management, generating a handshake over the bus back to the sender etc.

To perform these tasks, most networks have appropriate protocols, which are used to perform each task efficiently in part of the network which is organised as a series of layers designated for different functions.

In conventional data transmission systems, data, address and control information are transmitted through the commonly shared bus, and time to deal with addresses, and control information with the protocol in the corresponding layer is required. This greatly increased the overhead so that the time required to transfer desired data increases.

In an effort to reduce the transmission overhead on the main network, it has also been proposed to provide secondary networks which carry only control information so that the main network can be employed for the "full-time" transmission of data.

For example GB 2,022,365 discloses a packet-switching communication system network (Figures 2, 3 and 14) comprising:

a plurality of data input/output nodes (1', 18 to 20);

a first network means (satellite 23, and radio paths from 40-42 to the satellite) for establishing communication paths for said nodes, and transmitting data information between a sending node which assembles said data block into data packets for transmission on the communication medium, and a receiving node which disassembles the received packets from said communication medium into data to be transmitted (see page 1, lines 106 to 119 and page 2, lines 2 to 19);

a second network means (12 to 16) whose topology is different from that of said first network means for establishing communication paths between said data communication sending and receiving nodes, and transmitting control information on its communication medium (page 1, lines 112 to 114).

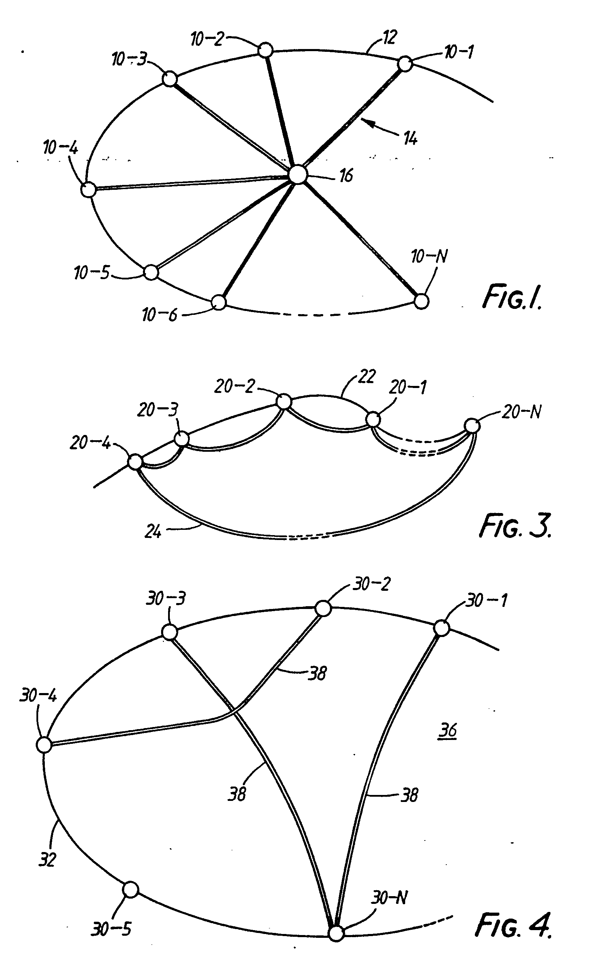

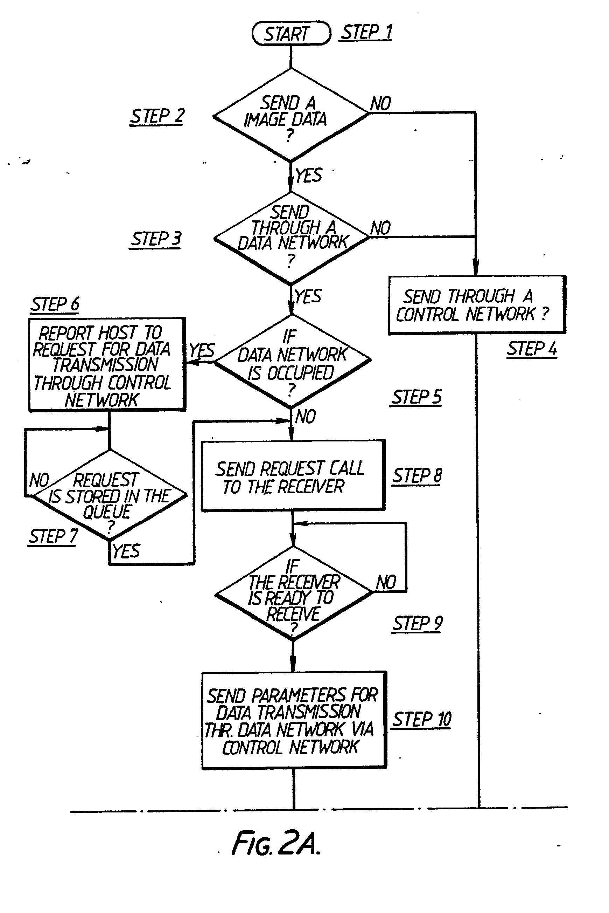

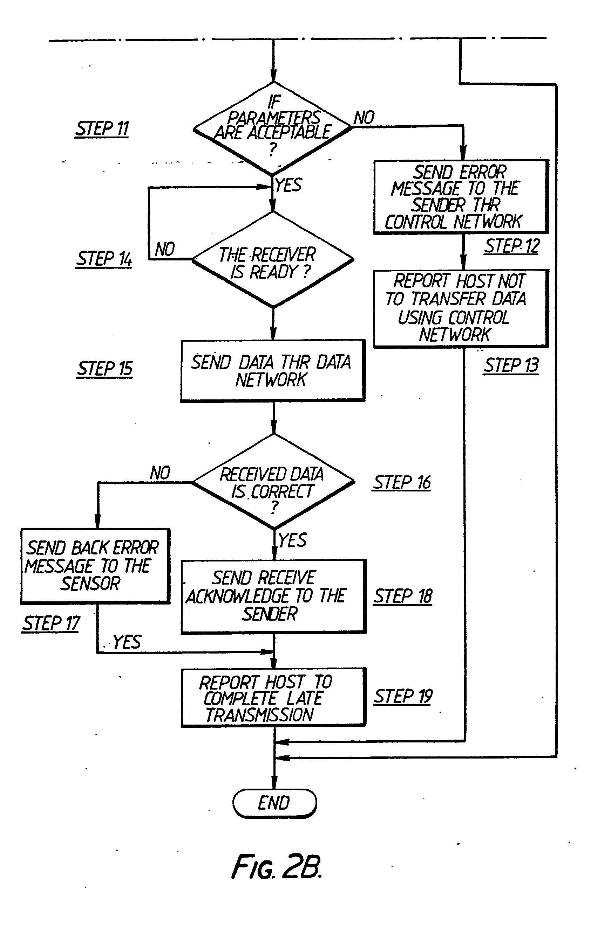

Similarly in "IEEE International Conference on Communications" May 14—17 1984 pages 125—129, there is disclosed a local area communication system network (LAN) (Figure 1) comprising;

a plurality of data input/output nodes (N1 to N11, Figure 1);

a first circuit-switching network means (unidirectional and bidirectional data bus segments as shown in Figure 1) for establishing communication paths for said nodes, and transmitting data information between a sending node on the communication medium, and a receiving node which receives data from said communication medium;

a second network means (control bus, Figure 1) whose topology is different from that of said first network means for establishing communication paths between said data communication sending and receiving nodes, and transmitting control information on its communication medium (see page 1, paragraph "FISHNET Architecture").

The present invention seeks to provide a local area network system using a packet switching network with an improvement in the data transmission efficiency of the communication for exchanging a large amount of information between nodes distributed along the network.

The present invention also seeks to provide a local area network system using a packet switching network which enables control of the flow of large packets containing large amounts of data together with small packets containing control messages for data flow control, and results in transferring a large amount of information efficiently.

Accordingly the present invention provides a packet-switching local area communication system network comprising:

a plurality of data input/output nodes,

a first network means for establishing communication paths for said nodes, and transmitting data information between a sending node which assembles said data block into data packets for transmission on the communication medium, and a receiving node which disassembles the received packets from said communication medium into data to be transmitted; and

a second network means whose topology is different from that of said first network means for establishing communication paths between said data communication sending and receiving nodes, and transmitting control information on its communication medium; said first network having a relatively higher capacity than said second network, so that control information of relatively low volume can be transmitted on said second network, whilst high-volume data is transmitted on said first network;

characterised by:

(a) means for detecting the volume of data and making a preliminary selection of the first network if the volume is higher than a predetermined amount or otherwise selecting the second network; and

(b) means for detecting whether high speed transmission is requested, after said preliminary selection by said means for detecting the volume of data, and if not, selecting the second network in place of said first network.

Some embodiments of the invention will now be described by way of example with reference to the accompanying drawings, in which:

Figure 1 is a schematic example of a local area communication network topology according to the present invention;

Figure 2 is a flow chart illustrating the sending and receiving of data in a local area communication network system employing a packet switching network according to a first embodiment according to the present invention;

Figure 3 is a block diagram of a local area communication network topology, in which one network has a loop topology of a second embodiment according to the present invention; and

Figure 4 is a block diagram of a local area communication network topology, in which one network has an irregular topology of a third embodiment according to the present invention.

A local area communication network is illustrated in Figure 1 and may consist of a collection of machines designated nodes 10—l to 10—N, each of which may be an independent data processor. The nodes are distributed along an interprocessor bus 12, which directly connects the nodes, and communicate with one another through this directed bus 12 (hereinafter referred to as control network). In addition, the nodes are connected by another network 14 (hereinafter referred to as switched data network) employing a star topology including a coupler 16. Thus the nodes are connected to both the networks, and the local area communication network system consisting of the interconnected nodes is capable of transmitting and receiving through both networks. The communication medium constituting the two buses may be a twisted pair, a coaxial cable, an optical fibre, or wave guide.

In this embodiment, the data to be transferred, such as image data, is transferred on the directed bus 14 of which the medium is for example an optical fibre, whilst the control messages for the flow control of data are transmitted and received through the other network bus 12 of which medium is for example a coaxial cable.

An explanation of a flow control system of data according to the present invention will now be given with reference to Figure 2.

Upon command (for bringing the node to the state for transmission of data), the following basic algorithm is executed.

Step 1.

Undertake start procedure and then proceed with step 2.

Step 2.

Check whether a large amount of data such as an image data is expected to be transmitted or not. If it is then proceed with step 3, otherwise go to step 4.

Step 3.

Determine as to whether a data network of high-speed communication bus is used for transmission of such data, if it is wanted, then proceed with step 5, otherwise go to step 4.

Step 4.

Attempt transmission of data through the control network of low-speed bus, and complete transmission of the packets and go to "END".

Step 5.

Oversee and monitor the data network of high-speed bus, if the data network is available for transmission of data then proceed with step 8, otherwise go to step 6.

Step 6.

Transmit Host Computer request RQ from one node for communication with another designated node through the control network in order to register its request, then proceed with step 7.

Step 7.

Wait until its request for communication is occurred in a queue, if its request occurs first, then go to step 8.

Step 8.

Propagate call request signal CR to the destination through the control network, then proceed with step 9.

Step 9.

Receive call accept signal CA from the destination, then proceed with step 10, otherwise go to step 8.

Step 10.

Send a control message with parameters for transmission of data through the data network between the sender and the receiver through the control network, then step 11.

Step 11.

Check whether such parameters are correct or not in the receiver, if they are, then proceed with step 14, otherwise go to step 12.

Step 12.

Send back an error message EM to the sender, then proceed with step 13.

Step 13.

The receiving node sends a message NC indicating that transmission is not carried out to Host computer, then go to "END".

Step 14.

The receiving node sends a communication ready signal CT through the control network to the sending node, then proceed with step 15.

Step 15.

The sending node transmits data to the receiving node through the data network, and after completion of data transmission proceed with step 16.

Step 16.

Check whether the received data is correct or erroneous in the receiving node, and issue the corresponding checking answer. If the received data is correct, proceed with step 18, otherwise go to step 17.

Step 17.

Transmit an incorrect checking answer NK to the sending node through the control network, then proceed with step 19.

Step 18.

Transmit a correct checking answer AK to the sending node through the control network, then proceed with step 19.

Step 19.

Send a message CPT indicating that transmission of data was completed to Host computer through the control network, and in which manages to close the connection by having both of the sending and receiving nodes exchange "CLOSE" messages.

Considering now the operation of the local area communication network system in accordance with the present invention, let it be assumed that the node 10—2 wishes to transmit an image data of 1 Mbytes to the node 10—6 via the networks shown in Figure 1. As an examplary illustration of the operation of the system, let it be assumed that the system architecture is based on a carrier sense multiple access with collision detection (CSMA/CD) mechanism as exemplified by the so-called ETHERNET. In CSMA/CD, users (nodes) transmit at any time they desire, and when conflicts (consisting of overlapping packet transmission) occur, the conflicting users schedule retransmission of their packets to some later time, incurring a random rescheduling delay.

Now, initially, the node 10—2, hereinafter referred to as a sending terminal (ST), sends a message which is a request for the transfer of information containing data of 1 Mbytes to the node 10—6, hereinafter referred to as a receiving terminal (RT) via the control network 12. After receiving the request message from the sending terminal (ST), the receiving terminal (RT) is prepared to receive data from the sending terminal (ST), then it is placed in a receiving ready condition. The receiving terminal (RT) sends RECEIVE READY via the control network 12 to the sending terminal (ST). In response to this RECEIVE READY, the sending terminal (ST) transmits data packets over the bus 14 constituting the data network to the receiving terminal (RT).

When the receiving terminal (RT) for which the transmitted data is intended has indicated that it has captured data correctly by placing a handshake signal on the control network 12, the sending terminal (ST) is confirmed that the whole of desired data is sent to the destinated receiving terminal.

In case that the received data is erroneous, in accordance with the checking answer NK (indicating that the received data is erroneous), the sending terminal (ST) retransmits the same data.

On the other hand, the sending terminal (ST) which finds the addressed receiving terminal (RT) communicates with another node via the data network consisting of the bus 14 monitors the bus 14, waits until the bus 14 goes idle. Also, when the addressed receiving terminal (RT) is occupied in communication with another terminal the receiver sends a message indicating the present state of it to the expected sender through the control network 12. Thereafter, once such transmission of data is finished, the addressed receiving terminal (RT) goes to be ready for receiving data from the expected sending terminal (ST), then sends RECEIVE READY via the control network 12 to the sending terminal (ST).

In response to the RECEIVE READY through the control network 12 from the receiving terminal (RT), the sending terminal (ST) initiates the transmission of data through the data network to the receiving terminal (RT), immediately. These procedures take place along with algorithm shown in Figure 2.

Thus, the control messages for data transmission between the sending terminal and the receiving terminal are exchanged via the control network, for example, the network of low-speed bus, and after establishing the connection between them, the sending terminal transmits its desired data to the addressed receiving terminal via the data network, for example, which consists of high-speed bus, whereby for a large amount of information to be transmitted from the sending terminal to the receiving terminal, each protocol in the terminals is simplified, furthermore the overhead prior to transmission of data due to the burden of control for the flow of data is considerably reduced.

In other words, it is possible to transmit a large amount of information from one node to any other node coupled to the networks according to the present invention rapidly, and efficiently.

As previously described, the scheme by way of which a node communicates with another node is the primary concern of the present invention and the circuitry components within the node itself, the bus, and the connections to it may be of a conventional configuration. Accordingly, a description of such components is omitted.

In this section, several alternatives are discussed about the network topology to comprise a control network and a data network and on which each of control messages and data is respectively, and separately exchanged. As illustrated in Figure 3, in which nodes 20—1 to 20—N are connected to a control communication bus 22 and a data communication bus 24 having a loop shape. Another alternative is depicted in Figure 4. If a high-speed transmission of data between any two nodes among all nodes 30—1 to 30—N is not required, the definite nodes which wish to communicate with one another in a high-speed transmission mode are connected by the data network 36 of a high-speed bus 38, and all nodes 30—1 to 30—N including the definite nodes are also distributed along another network 32 comprising a low-speed communication bus.

The major feature of this topology rests on the fact that the whole communication network can be constructed at low cost since it is not necessary to connect all nodes by the high-speed communication bus to form a network.

As explained above, the communication medium constituting the data communication bus and the control communication channel may be a coaxial cable operating at 70 MBPS (Megabits per second), or an optical fibre at a speed of 400 MBPS. In consideration of the required bus speed, the communication medium used for the network architectures is desirably optical fibre. As an alternative however, communication using electromagnetic radiation (e.g. light or radio waves) through the atmosphere may be used to avoid physical interconnection.

To construct a local area communication network system which can achieve the objects of the present invention, inexpensively, an existing local network may be used as one of the networks, with the additional network comprising a high-speed optical fibre communication bus.

There will now be described, various alternative forms of network disregarding any consideration of complexity, cost or implementation preference. When an appropriate cable having multiple transmission capability, such as an electro-optical multiplex system, is used as a communication bus, it is possible to send different data over the multiple transmission cable simultaneously, and even when one of the separate connections set up by the multiple transmission bus is unavailable for transmission it is possible to communicate with another node via the remaining connections.

While various preferred embodiments in accordance with the present invention have been described, it is understood that the invention is not limited to these embodiments but is also applicable to other communication media such as bidirectional communication buses, fibre optics, broad band communication techniques, and the like. Also, the present invention is intended to cover general communication configurations which employ the basic transmission mechanism set for above, with, for example, the control network being used for data transfer instead of the control information in response to need.

Accordingly, it is intended that the scope of the present invention cover any and all such variations falling within the scope of the accompanying claims.

## Claims

1. A packet-switching local area communication system network comprising:

a plurality of data input/output nodes (10—1, ... 10—N),

a first network means (14) for establishing communication paths for said nodes, and transmitting data information between a sending node which assembles said data block into data packets for transmission on the communication medium, and a receiving node which disassembles the received packets from said communication medium into data to be transmitted; and

a second network means (12) whose topology is different from that of said first network means for establishing communication paths between said data communication sending and receiving nodes, and transmitting control information on its communication medium, said first network having a relatively higher capacity than said second network, so that control information of relatively low volume can be transmitted on said second network, whilst high-volume data is transmitted on said first network; characterised by:

(a) means for detecting the volume of data and making a preliminary selection of the first network if the volume is higher than a predetermined amount or otherwise selecting the second network; and

(b) means for detecting whether high speed transmission is requested, after said preliminary selection by said means for detecting the volume of data, and if not, selecting the second network in place of said first network.

2. A packet-switching local area network according to claim 1 in which said control information includes packet addressing functions, type of packet service, node operation characteristics and error reporting functions for use in conjunction with each node.

3. A local area communication network according to claim 1 or claim 2 wherein said first network means includes a transmission channel or communication medium along which all nodes are distributed.

4. A local area communication network according to claim 3, wherein said second network means includes the corresponding transmission channels between a predetermined data communication sending node and receiving node.

5. A local area communication network according to claim 4 wherein said transmission channels constituting said second network means are connected between said sending and receiving nodes via a concentrator.

6. A local area communication network according to any preceding claim wherein said first network means is capable of transmitting data information independent of transmission of control information through said second network means.

7. A local area communication network according to any preceding claim wherein said communication media comprise multiplexed transmission channels.

8. A local area communication network according to any preceding claim wherein electromagnetic waves propagated through the atmosphere are used as said communication media.

**Patentansprüche**

1. Lokales Übertragungsnetz mit Datenpaketvermittlung mit:

Einer Vielzahl von Daten-Eingabe/Ausgabe-Knoten (10—1, . . ., 10-N);

einer ersten Netzwerkeinrichtung (14) zur Bereitstellung von Übermittlungswegen zwischen den Knoten und zur Übertragung von Daten von einem sendenden Knoten, der den Datenblock zur Weiterleitung über das Übermittlungsmedium in Datenpakete unterteilt, zu einem empfangenden Knoten, der die über das Übermittlungsmedium empfangenen Datenpakete zu dem zu übertragenden Datenblock zusammensetzt; und

einer zweiten Netzwerkeinrichtung (12), deren Topologie von der der ersten Netzwerkeinrichtung zur Auswahl von Übermittlungswegen zwischen sendenden und empfangenden Knoten verschieden ist und die Steuerungsinformationen auf ihrem Übermittlungsmedium überträgt, wobei das erste Netzwerk eine höhere Übertragungskapazität als das zweite aufweist, so daß die Steuerungsinformationen relativ kleinen Umfangs auf dem zweiten Netwerk übertragen werden können, während die Datenblöcke großen Umfangs auf dem ersten Netzwerk übertragen werden; gekennzeichnet durch:

a) Mittel zur Bestimmung des Umfangs der Daten und zur vorläufigen Auswähl der ersten Netzwerks, wenn der Datenumfang höher als ein vorgegebener Wert ist oder andernfalls zur Auswahl des zweiten Netzwerks; und

b) Mittel zum Nachweis, ob eine hohe Datenübertragungsrate angefordert ist, wobei dies nach der vorläufigen Auswahl durch die Mittel zu Nachweis des Datenumfangs festgestellt wird, und falls nicht, zur Auswahl des zweiten anstelle des ersten Netzwerks.

2. Lokales Übertragungsnetz nach Anspruch 1, wobei die Steuerungsinformationen Paketadressierungs-, Pakettypfunktionen, Knoten-Operationscharakteristiken und Fehlermeldungen im Zusammenhang mit jedem Knoten beinhalten.

3. Lokales Übertragungsnetz nach Anspruch 1 Oder 2, wobei die erste Netzwerkeinrichtung einen Übertagungskanal oder ein Übermittlungsmedium aufweist, an dem entlang alle Knoten angeordnet sind.

4. Lokales Übertragungsnetz nach Anspruch 3, wobei die zweite Netzwerkeinrichtung mit zugehörigen Übertragungskanälen zwischen vorgegebenen sendenden und empfangenden Knoten zur Datenübertragung ausgestattet ist.

5. Lokales Übertragungsnetz nach Anspruch 4, wobei die Übertragungskanäle, die die zweite Netzwerkeinrichtung bilden, zwischen den sendenden und empfangenden Knoten in einem Zentalknoten verbunden sind.

6. Lokales Übertragungsnetz nach einem der vorhergehenden Ansprüche, wobei die erste Netzwerkeinrichtung in der Lage ist, Daten zu übertragen, unabhängig von der Übertragung von Steuerinformationen über die zweite Netzwerkeinrichtung.

7. Lokales Übertragungsnetz nach einem der vorhergehenden Ansprüche, wobei die Übermittlungsmedien Übertragungskanäle im Multiplex-Betrieb enthalten.

8. Lokales Übertragungsnetz nach einem der vorhergehenden Ansprüche, wobei als Übermittlungsmedien elektromagnetische Wellen, die sich in der Atmosphäre ausbreiten, verwendet werden.

**Revendications**

1. Système de communications local à commutation par paquets qui comprend:

un certain nombre de noeuds d'entrée et de sortie de données (10—1 . . . 10—N);

un premier réseau (14) pour établir des voies de communication pour lesdits noeuds et transmettre des informations ou des données entre un noeud émetteur qui assemble lesdits blocs de données en paquets de données appelés à être transmises sur le miliu de communication, et un noeud récepteur qui démonte les paquets reçus par ledit milieu de communication en données destinées à être transmises; et

un second réseau (12) dont la topologie est différente de celle du premier réseau afin d'établir des voies de communication entre lesdits noeuds de communication émetteurs et récepteurs de données et transmettre des informations de commande sur son milieu de communication, ledit premier réseau ayant une capacité relativement supérieure à celle du second, de sorte que des informations de commande ayant un volume relativement réduit peuvent ête transmises sur ledit second réseau, tandis que les données volumineuses sont transmises sur le premier réseau, caractérisé par:

a) des moyens pour détecter le volume de données et pour effectuer une sélection préliminaire du premier réseau si ce volume est supérieur à une quantité predéterminée et pour, dans le cas contraire, sélectionner le second réseau; et

b) des moyens pour détecter si une transmission à grande vitesse est requise après ladite sélection préliminaire par les moyens de détection du volume de données et, si la réponse est non, pour sélectionner le second réseau à la place du premier.

2. Réseau local de commutation par paquets selon la revendication 1, caractérisé en ce que lesdites informations de commande incluent des fonctions d'addressage de paquets, de type de service de paquet, de caractéristiques opératoires des noeuds et de fonctions de signalisation d'erreurs aux fins d'utilisation conjointement avec chaque noeud.

3. Réseau local de commutation local selon la revendication 1 ou 2, caractérisé en ce que le premier réseau comporte un canal de transmission ou un milieau de communication le long duquel tous les noeuds sont répartis.

4. Réseau local de commutation local selon la revendication 3, caractérisé en ce que le second réseau inclut les canaux de transmission correspondants entre un noeud émetteur et un noeud récepteur de données prédéterminés.

5. Réseau de communication local selon la revendication 5, caractérisé en ce que les canaux de transmission qui constituent le second réseau sont branchés entre lesdits noeuds émetteurs et récepteurs via un concentrateur.

6. Réseau de communication local selon l'une quelconque des revendications précédentes, caractérisé en ce que le premier réseau est capable de transmettre des données ou des informations indépendamment des informations de commande de transmission par ledit second réseau.

7. Réseau de communication local selon l'une quelconque des revendications précédentes, caractérisé en ce que les milieux de transmission comprennnet des canaux de transmission multiplexés.

8. Réseau de communication local selon l'une quelconque des revendications précédentes, caractérisé en ce que l'on utilise comme milieux de communication des ondes électromagnétiques se propageant dans l'atmosphère.

FIG. I.

FIG. 3.

FIG. 4.

1

START ) STEP 1

STEP 2

SEND A
IMAGE DATA
?  →  NO

YES

STEP 3

SEND
THROUGH A
DATA NETWORK
?  →  NO

YES

SEND THROUGH A
CONTROL NETWORK ?

STEP 4

STEP 6

REPORT HOST TO
REQUEST FOR DATA
TRANSMISSION
THROUGH CONTROL
NETWORK

YES ←

IF
DATA NETWORK
IS OCCUPIED
?

STEP 5

NO

NO ←

REQUEST
IS STORED IN THE
QUEUE
?

STEP 7    YES

SEND REQUEST CALL
TO THE RECEIVER

STEP 8

IF
THE RECEIVER
IS READY TO
RECEIVE
?  →  NO

STEP 9

SEND PARAMETERS FOR
DATA TRANSMISSION
THR. DATA NETWORK VIA
CONTROL NETWORK

STEP 10

FIG. 2A.

STEP 11

IF PARAMETERS ARE ACCEPTABLE ?

NO

YES

STEP 14

NO

THE RECEIVER IS READY ?

SEND ERROR MESSAGE TO THE SENDER THR CONTROL NETWORK

STEP 12

REPORT HOST NOT TO TRANSFER DATA USING CONTROL NETWORK

STEP 13

STEP 15

SEND DATA THR DATA NETWORK

NO

RECEIVED DATA IS CORRECT ?

STEP 16

YES

SEND BACK ERROR MESSAGE TO THE SENSOR

STEP 17

YES

SEND RECEIVE ACKNOWLEDGE TO THE SENDER

STEP 18

REPORT HOST TO COMPLETE LATE TRANSMISSION

STEP 19

END

FIG. 2B.

3